# FASCICULE DE BREVET EUROPEEN

(11) **EP 0 536 256 B1**
(45) Date de publication et mention de la délivrance du brevet: **20.08.1997**
(21) Numéro de dépôt: 91912362.0
(22) Date de dépôt: 04.07.1991
(51) Int. Cl.: E21B 17/08, E21B 17/20, E21B 17/18, E21B 19/22, F16L 31/00, F16L 37/08, F16L 39/00

(54) **TUBE RADIALEMENT DEFORMABLE EN PLUSIEURS TRONCONS RACCORDES DE MANIERE DEMONTABLE**
RADIAL VERFORMBARES ROHR MIT MEHREREN LÖSBAR VERBUNDENEN ELEMENTEN
RADIALLY DEFORMABLE TUBE CONSISTING OF SEVERAL RELEASABLY CONNECTED SECTIONS

(30) Priorité: 04.07.1990 FR 9008474
(43) Date de publication de la demande: 14.04.1993
(73) Titulaire: NOBILEAU, Philippe, F-06300 Nice (FR)
(72) Inventeur: NOBILEAU, Philippe, F-06300 Nice (FR)
(86) Numéro de dépôt international: FR9100542
(87) Numéro de publication internationale: WO9201139

(56) Documents cités:
- AU-B- 512 361
- DE-C- 592 474
- GB-A- 106 476
- GB-A- 1 462 188
- GB-A- 2 016 105
- US-A- 2 410 786
- US-A- 2 537 284
- US-A- 3 087 747
- US-A- 3 359 013
- US-A- 3 784 235
- US-A- 4 570 705

## Description

Dans les activités de forage pétrolier, il existe une opération qui consiste à gainer le puits foré par un tube pour, d'une part, contenir les terrains et. d'autre part. contenir la pression d'éruption lorsqu'elle se manifestera.

Actuellement ce tubage est métallique et est descendu dans les puits progressivement au fur et à mesure de l'addition d'un tronçon de tube à la partie supérieure de la colonne déjà descendue dans le puits.

Le document européen 527 932, du même déposant, propose un dispositif de tubage dans lequel la paroi du tube est radialement déformable, de sorte que le tubage peut être descendu dans le puits dans son état replié, donc sous un encombrement radial moindre et, une fois en place, est gonflé pour que sa paroi retrouve une forme cylindrique. On remplit alors de ciment l'espace annulaire entre les terrains et le tube. L'intérêt d'un tel dispositif réside dans le fait que chaque longueur de tubage successive est réalisée au cours du forage avec un tube de diamètre unique, ce tube replié pouvant passer dans le tube déplié préalablement installé. La conséquence de ce tubage à diamètre unique est un forage toujours de même diamètre de relativement faible dimension d'où les économies réalisées en ce qui concerne les outils, le volume de matériau foré et le temps de forage.

Le tubage est stocké sur de grandes bobines avant son utilisation, à l'état replié, donc sous un volume relativement faible, beaucoup plus faible que les tubages traditionnels.

Un tubage complet, dont la longueur peut varier de quelques centaines de mètres à plusieurs kilomètres, est préparé par pré-assemblage de plusieurs tronçons raccordés les uns au bout des autres pour obtenir la longueur souhaitée, qui est ensuite stockée sur une bobine en attendant sa mise en place dans le puits.

Il a donc fallu prévoir des moyens pour réaliser ce raccordements, qui préservent au tube sa faculté de pouvoir être radialement replié. Ces moyens doivent en outre être démontables. En effet, il est souvent nécessaire d'ajuster sur le chantier la longueur du tubage à descendre dans le puits en fonction de la longueur de forage réellement effectuée, qui peut être différente par excès ou par défaut de l'objectif prévu qui avait dicté la longueur du tubage à préparer. Il faut donc pouvoir augmenter ou diminuer cette longueur préparée et ce, sur le lieu de forage. Pour ce faire, on démonte un raccordement pour retirer la longueur excédentaire (ou la portion spéciale d'extrémité que comporte ce type de tubage) et procéder à la connexion d'un supplément de longueur ou de la portion spéciale d'extrémité.

Les dispositifs connus tel que celui décrit dans le brevet US 3,784,235 ne peuvent être envisagés pour des tubages dont la paroi du tube est radialement déformable, étant donné que l'extrémité mâle n'est pas suffisamment maintenue dans l'extrémité femelle dans la direction radiale intérieure pour éviter son décrochage lors du pliage et dépliage du tubage et de ses manutentions à l'état replié.

La présente invention concerne donc un tube équipé de moyens de raccordement démontables et une application de ces moyens de raccordement démontables à un tubage de forage pétrolier conforme au document européen 527 932.

Ainsi, un premier objet de l'invention consiste en un tube radialement déformable constitué par au moins deux tronçons raccordés bout à bout de manière démontable, dans lequel l'extrémité de l'un des tronçons est, sur une longueur axiale déterminée, de périmètre intérieur sensiblement égal au périmètre extérieur de l'extrémité de l'autre tronçon, de manière à constituer une extrémité femelle, le bord extrême de l'extrémité mâle comportant un premier talon d'accrochage annulaire s'étendant axialement et étant susceptible d'être logé de manière étanche dans une cavité annulaire de l'extrémité femelle comportant une ouverture annulaire axiale formée d'une part par un second talon d'accrochage annulaire faisant partie de ladite extrémité femelle et s'étendant axialement en face et du coté intérieur du tube par rapport au reste de la paroi intérieure de ladite extrémité femelle et d'autre part par ledit reste de ladite paroi intérieure au voisinage dudit second talon.

Un raccordement ainsi réalisé est souple donc permet un pliage radial du tube à son niveau tout en assurant l'étanchéité de la jonction. Il conserve donc l'aptitude du tube à être gonflé comme cela est décrit dans le brevet déjà cité.

Dans un mode préféré de fabrication, la paroi du tube est en matériau composite à base de fibres orientées, définissant une première couche interne dans laquelle les fibres sont orientées longitudinalementet une seconde couche externe dans laquelle les fibres sont orientées circonférentiellement, l'extrémité mâle étant dépourvue de seconde couche.

On parvient ainsi, lors du gonflage du tube, lorsqu'il est en position dans un puits foré, à réaliser un contact intime entre les extrémités mâle at femelle, les fibres de la partie mâle étant pressées fortement sur les fibres de l'extrémité femelle et créant des forces de friction importantes s'opposant au glissement de la partie mâle dans la partie femelle.

Un second objet de l'invention est un tubage comportant au moins deux tronçons raccordables de manière démontable, chaque tronçon comportant un tronçon de tube équipé de moyens de raccordement comme décrits ci-dessus et un tronçon de canalisation interne, sur lequel le tronçon de tube est replié. Selon une caractéristique particulière de cet ensemble, chaque extrémité de tronçon de canalisation comporte des moyens de raccordement, ceux du tronçon contenu dans une extrémité mâle étant situés au-delà du bord extrême de cette extrémité, tandis que ceux du tronçon contenu dans une extrémité femelle sont situés en-deçà de la gorge susdite. Cette disposition permet d'accéder à ces moyens de raccordement en maintenant les enveloppes tubulaires extérieures déconnectées, la partie mâle repliée sur le tronçon de canalisation interne et la partie femelle dans son état déplié.

Comme dans la partie courante de chaque tronçon de tubage. le tube extérieur est maintenu dans son état replié sur la canalisation interne en ayant fait le vide dans l'espace séparant cette canalisation du tube extérieur, chaque tronçon de tubage possède, au voisinage de ses extrémités de raccordement, une membrane s'étendant entre la canalisation interne et l'enveloppe extérieure, permettant de procéder au raccordement sans affecter l'espace sous vide.

L'invention sera mieux comprise au cours de la description d'un exemple de réalisation donné ci-après qui permettra d'en dégager les avantages et les caractéristiques secondaires.

Il sera fait référence aux dessins annexés dans lesquels:
- la figure 1 est une vue en coupe longitudinale selon la ligne II de la figure 2 d'un tubage selon l'invention déplié et cimenté en place, au niveau d'un raccord,
- la figure 2 illustre le passage d'un raccord d'un tronçon de tubage descendu dans un puits de forage au niveau d'une portion de ce puits déjà tubée,
- la figure 3 est une coupe selon la ligne III III de la figure 2,
- la figure 4 illustre schématiquement par une vue en coupe une opération de raccordement de deux tronçons de tubage,
- la figure 5 est une coupe selon la ligne V V de la figure 4.

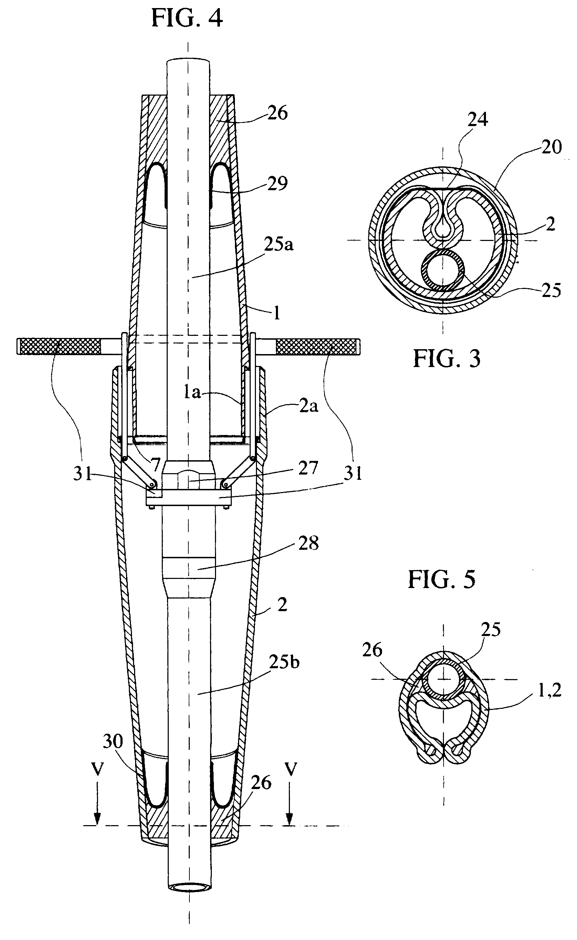

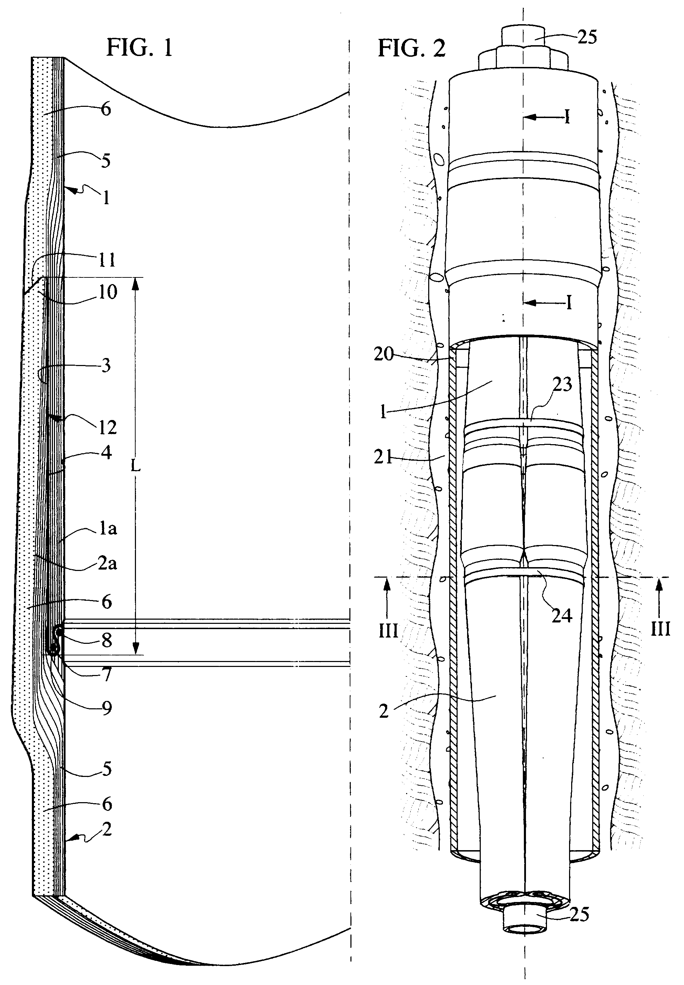

Les dessins représentent une application des moyens de l'invention à un tubage particulier tel qu'il est défini en détail dans le document européen 527 932, mais l'invention concerne aussi un simple tube déformable comme représenté dans son état déplié à la figure 1. Sur cette figure, 1 et 2 représentent deux tronçons raccordés l'un à l'autre. Le tronçon supérieur 1 possède une extrémité la de raccordement dont le périmètre extérieur (ou le diamètre lorsqu'elle est dépliée) est sensiblement égal au périmètre intérieur (ou diamètre) de l'extrémité de raccordement 2a du tronçon 2. L'extrémité mâle la s'emboîte donc parfaitement dans l'extrémité femelle 2a. Pour l'y introduire il est facile de laisser s'ouvrir l'extrémité femelle 2a et de maintenir repliée l'extrémité mâle la comme cela est visible sur le figure 4.

La longueur de portée L des deux surfaces 3 et 4 l'une sur l'autre est calculée en fonction de l'effort de friction souhaité entre ces surfaces lorsque le tube est gonflé, compte-tenu par ailleurs de la qualité de l'état de ces surfaces et des matériaux utilisés. A ce propos, on notera que la paroi des tronçons de tube 1, 2 est de préférence en un matériau composite à base de fibres orientées dans une matrice. Cette paroi présente une couche interne 5 dans laquelle les fibres sont orientées longitudinalement et une couche externe 6 dans laquelle les fibres sont orientées circonférentiellement. La structure est ainsi "armée" pour résister à l'allongement sous l'effet de son poids et du liquide de gonflage du tube, et à l'allongement circonférentiel dû à la pression interne.

Il faut remarquer sur la figure 1 qu'au niveau de l'emboîtement des extrémités. la paroi de l'extrémité mâle la est dépourvue de couche externe 6 si bien que la pression interne s'exerce sur des fibres longitudinales qui ont tendance à s'appliquer fortement sur la surface interne de l'autre extrémité qui comporte sa couche 6 externe formant frette de maintien contre l'expansion radiale.

L'accrochage axial des deux tronçons 1 et 2 et l'étanchéité du raccordement est réalisé par la coopération de deux talons d'accrochage 7 et 8. Le talon 7 est constitué par le bord extrême de l'extrémité mâle la et est armé d'un lien inextensible à la manière d'un talon de pneumatique. Il en est de même du talon 8 qui est formé par le bord intérieur d'un gorge interne 9 dans l'extrémité femelle 2a qui accueille le talon 7 de sorte que ce dernier se trouve logé derrière et sous le talon 8 sans pouvoir s'en décrocher.

A l'autre extrémité du raccordement. le bord extrême 10 de l'extrémité femelle 2a est logé dans une gorge 11 de profil complémentaire, ménagée à l'extérieur de l'extrémité mâle 1a. Comme 1a paroi de l'extrémité femelle 2a est en forme de tulipe qui converge vers le haut, et comme les surfaces 3 et 4 sont cylindriques, la couche intérieure 5, au niveau de cette extrémité 2a va en s'amenuisant, si bien que le bord 10 n'est formé que par la couche extérieure 6, donc très résistant à l'allongement ou à la compression circonférentiels.

La gorge 11 est en fait limitée par la surface extérieure de la couche interne 5 et une surface conique taillée à l'extrémité de la couche extérieure 6 à fibres circonférentielles du tronçon 1. Le bord 10 est également conique et est emboîté dans la gorge 11. Cet emboîtement est également très résistant aux contraintes circonférentielles. Entre les deux surfaces en contact 3 et 4, on a interposé une couche d'adhésif 12 augmentant la cohésion du raccordement. Cet adhésif permet la dissociation des parties raccordées, tant que le tube n'a pas été gonflé.

A la figure 2, on a représenté, à l'intérieur d'un élément de tubage 20 déployé et cimenté dans un puits foré 21, une portion de l'élément de tubage 22 qui sera mis en place sous l'élément 20. L'élément 22 comprend au moins deux tronçons 1 et 2 raccordés, la zone de jonction étant repliée radialement et maintenue dans cet état par des liens de cerclage extérieurs 23 et 24.

Un tronçon de tubage comporte une enveloppe extérieure en forme de tube 1, 2, et une canalisation intérieure 25 sur laquelle l'enveloppe extérieure est radialement repliée comme on le voit aux figures 3 et 5. La figure 5 est une coupe de la section courante de l'élément de tubage avec le tube extérieur maintenu replié grâce à la mise sous vide de l'espace 26 régnant entre la canalisation 25 et l'enveloppe extérieure 1, 2. La figure 3 est une coupe au niveau du raccordement où le maintien de l'état replié du tube extérieur 1, 2 est assuré par des liens de cerclage 24.

La figure 4 illustre les dispositions de l'invention qui permettent de procéder au raccordement des deux tronçons 25a et 25b de la canalisation 25. Pour ce faire, les extrémités de ces tronçons sont équipées du moyens d'accouplement du genre joint union, l'extrémité du tronçon situé dans la partie mâle la portant ses moyens d'accouplement 27 au-delà du bord extrême 7 de cette partie mâle. Les autres moyens d'accouplement 28 portés par l'autre tronçon 25b sont, quant à eux, logés à l'intérieur de l'extrémité femelle 2a du tube 2, en-deçà de la gorge 9. Des membranes 29 et 30 permettent d'isoler les espaces tels que 26 qui sont sous vide, des zones de raccordement.

On expliquera brièvement ci-après une opération d'ajustement de la longueur d'une section de tubage.

Sur la bobine de stockage du tubage, les tronçons sont raccordés comme représenté à la figure 2. Pour modifier la longueur du tubage, on commence par ouvrir un raccord en coupant au moins le lien 24 de l'extrémité femelle 2. On ouvre ensuite le raccordement du tube extérieur en utilisant la déformabilité de la paroi pour d'une part faire sortir le bord 10 de la gorge 11 et, d'autre part détacher les talons d'accrochage 7 et 8. La partie femelle peut alors s'ouvrir radialement comme illustré par la figure 4. Dans l'espace entre la partie 2 et la partie 1 qui est restée liée (ou que l'on a recerclée), il est possible d'introduire un outil 31 pour manoeuvrer le joint 27, 28 afin de séparer les deux tronçons 25a et 25b.

On peut alors introduire dans l'extrémité 2, soit la partie terminale spéciale du tubage. si l'ajustement consistait en un raccourcissement, soit une prolongation de ce tubage et, au moyen de l'outil 31, procéder au raccordement de la canalisation interne puis, en dépliant l'extrémité mâle, procéder à l'enclenchement des talons 7 et 8 et du bord 10 dans la gorge 11, en utilisant la déformabilité de la paroi. Enfin, on remet en place des cercles 23 et 24 pour replier le tube extérieur sur la canalisation 25, en ayant par exemple prévu un moyen entre les deux parties 1 et 2 pour extraire l'air emprisonné dans la zone de raccordement au moment du cerclage (ce moyen peut être un drain que l'on retirera après avoir obtenu un vide suffisant ou un produit chimique absorbant l'air dans la zone de raccordement).

Il peut enfin être avantageux de placer à l'intérieur de la zone de connexion, une charge minérale, par exemple en poudre qui évitera l'écrasement de cette zone lors de la descente du raccord dans le puits plein de boue.

## Revendications

1. Tube radialement déformable constitué par au moins deux tronçons (1, 2) raccordés bout à bout de manière démontable, dans lequel l'extrémité (2a) de l'un des tronçons (2) est, sur une longueur axiale déterminée (L), de périmètre intérieur sensiblement égal au périmètre extérieur de l'extrémité (la) de l'autre tronçon (1), de manière à constituer une extrémité femelle (2a), le bord extrême de l'extrémité mâle comportant un premier talon d'accrochage annulaire (7) s'étendant axialement et étant susceptible d'être logé de manière étanche dans une cavité annulaire (9) de l'extrémité femelle, caractérisé en ce que ladite cavité annulaire (9) est une ouverture annulaire axiale formée d'une part par un second talon d'accrochage annulaire (8) faisant partie de ladite extrémité femelle et s'étendant axialement en face et du coté intérieur du tube par rapport au reste de la paroi intérieure de ladite extrémité femelle et d'autre part par ledit reste de ladite paroi intérieure au voisinage dudit second talon (8).

2. Tube selon la revendication 1, caractérisé en ce que sa paroi est en matériau composite à base de fibres orientées, définissant une première couche interne (5) dans laquelle les fibres sont orientées longitudinalement et une seconde couche externe (6) dans laquelle les fibres sont orientées circonférentiellement, l'extrémité mâle (la) étant dépourvue de seconde couche (6).

3. Tube selon la revendication 2, caractérisé en ce que l'extrémité femelle (2a) est, sur la longueur axiale (L) de forme conique, convergente vers son bord extrême (10), la couche interne (5) allant s'amenuisant depuis la gorge d'accrochage (9) jusqu'à ce bord extrême (10).

4. Tube selon la revendication 3, caractérisé en ce que le bord extrême (10) de l'extrémité femelle (2a) est logé dans une gorge extérieure (11) de section radiale triangulaire et que ledit bord extrême (10) et ladite gorge (11) sont principalement situées dans la couche externe (6) de chaque paroi.

5. Tubage comportant au moins deux tronçons de tube (1, 2) raccordables de manière démontable selon l'une quelconque des revendications précédentes et un tronçon de canalisation (25) interne, sur lequel le tronçon de tube (1, 2) est replié, caractérisé en ce que chaque extrémité de tronçon (25a, 25b) de canalisation comporte des moyens de raccordement (27, 28), ceux (27) du tronçon (25a) contenu dans une extrémité mâle (1a) étant situés au-delà du bord extrême (7) de cette extrémité, tandis que ceux du tronçon (25b) contenu dans une extrémité femelle (2a) sont situés en-deçà de la gorge (9) susdite.

6. Tubage selon la revendication 5, caractérisé en ce que chaque tronçon de tubage possède, au voisinage de ses extrémités de raccordement, une menbrane (29, 30) s'étendant entre la canalisation interne (25) et les deux tronçons de tube (1, 2), pour isoler le volume interne (26) du tubage par rapport à chaque zone de connection.

## Patentansprüche

1. Leitung, die hat, ein radial vertrug deformable-Mauer sich von wenigstens zwei Teilen wieder (1, 2) verband in einem herausnehmbaren Art-Ende, um zu enden in dem das äußerst Ende (2a) von einem von Teilen (2) ist, auf einer entschlossenen axialen Länge (L), von zusehends gleicher innener Umgrenzung zur Außen Umgrenzung des äußerst Ende (1a) vom anderen Teil (1) um ein weibliches äußerst Ende zu bilden (2a), die äußerst Seite des männlichen äußerst Ende einschließlich einer ersten ringförmigen abschließend Perle (7) das Ausbreiten axial und das Sein anfällig, in luftdicht verschlossene Art in einem ringförmigen Hohlraum beherbergt zu werden (9) vom weiblichen äußerst Ende, charakterisierte in daß das ringförmigen Hohlraum sagte (9) ist eine axiale ringförmige Öffnung, die auf einer Hand durch eine Sekunde ringförmige abschließend Perle gebildet wurde, (8) Teil gesagt weiblichen äußerst Ende und das Ausstrecken axial, das Gegenüberstehen und von der innenen Seite der Leitung in Hinsicht auf dem Rest von der innenen Oberfläche von gesagt weiblichem äußerst Ende und auf der anderen Seite gesagt Überreste gesagt innener Oberfläche in der Nähe von sagte zweite Perle (8).

2. Leitung nach Anspruch 1, charakterisierte in gesagt Mauer, ist in zusammengesetztem Material, das mit gesinnten Fasern gebildet wurde, das Definieren einer erster innererer Schicht (5) in dem Fasern der Länge nach orientiert werden und eine Sekunde externe Schicht (6) in dem Fasern circumferentially orientiert werden, gesagt männliches Ende (1a) das Fehlen der zweiten Schicht (6).

3. Leitung nach Anspruch 2, charakterisierte in daß das weibliche äußerst Ende (2a) ist, auf der axialen Länge (L) kegelförmig, konvergierend zu seiner äußerst Seite (10), die innerere Schicht (5) das Reduzieren vom ringförmigen Hohlraum (9) bis diese Extrem-Seite (10).

4. Leitung nach Behauptung 3, charakterisierte in daß die äußerst Seite (10) vom weiblichen äußerst Ende (2a) wird in einer Außen Furche beherbergt (11) von dreieckigem radialem Teil und jener obenerwähnten äußerst Seite (10) und sagte Furche (11) wird in der externen Schicht hauptsächlich hingestellt (6) von jeder Aufteilung.

5. Leitung, die zwei Teile von Rohr wenigstens einschließt, (1, 2) verband in einer herausnehmbaren Art nach ein keine von den vorausgehenden Behauptungen und einem Teil von in Leitung (25) auf dem der Teil von Rohr (1, 2) wird gefaltet, charakterisierte in daß der jedes äußerst Ende von Teil (25a, 25b) Pipeline schließt Mittel vom Einstellen ein (27, 28), jene (27) vom Teil (25a) Inhalt im Mann eines Endes (1a) das werden darüber hinaus von der äußerst Seite hingestellt (7) von dicsem äußerst Ende, während jene des Teiles (25b) Inhalt in einem weiblichen äußerst Ende (2a) wird im gesagt Hohlraum beherbergt (9).

6. Leitung nach Anspruch 5, charakterisierte im, was jeder Teil von Leitung besitzt, zur Nachbarschaft seiner einstellend Extremitäten, eine Membrane (29, 30) das Ausbreiten zwischen der innereren Oberfläche (25) und die zwei Teile von Rohr (1, 2), den innereren Band abzusondern (26) von der Leitung in Hinsicht auf jeder Zone von Verbindung.

## Claims

1. Pipe having a radially deformable wall made up of at least two sections (1, 2) connected in a removable manner end to end, in which the extremity (2a) of one of sections (2) is, on a determined axial length (L), of appreciably equal interior perimeter to the outside perimeter of the extremity (1a) of the other section (1), in order to constitute a female extremity (2a), the extreme side of the male extremity including a first annular locking bead (7) spreading axially and being susceptible to be lodged in sealed manner in an annular cavity (9) of the female extremity, characterized in that that said annular cavity (9) is an axial annular opening formed on one hand by a second annular locking bead (8) part of said female extremity and extending axially, facing and of the interior side of the pipe with regard to the remainder of the interior surface of said female extremity and on the other hand said remains of said interior surface in the vicinity of said second bead (8).

2. Pipe according to claim 1, characterized in said wall is in composite material formed with oriented fibers, defining a first internal layer (5) in which fibers are oriented longitudinally and one second external layer (6) in which fibers are oriented circumferentially, said male end (1a) lacking the second layer (6).

3. Pipe according to claim 2, characterized in that the female extremity (2a) is, on the axial length (L) cone-shaped, convergent toward its extreme side (10), the internal layer (5) reducing from the annular cavity (9) until this extreme side (10).

4. Pipe according to claim 3, characterized in that the extreme side (10) of the female extremity (2a) is lodged in an outside groove (11) of triangular radial section and that aforesaid extreme side (10) and said groove (11) are situated mainly in the external layer (6) of every partition.

5. Pipe including at least two sections of tube (1, 2) connected in a removable manner according to an any of the previous claims and a section of inside duct (25), on which the section of tube (1, 2) is folded, characterized in that that every extremity of section (25a, 25b) pipeline includes means of adjusting (27, 28), those (27) of the section (25a) content in an end's male (1a) being situated beyond of the extreme side (7) of this extremity, while those of the section (25b) content in a female extremity (2a) are lodged in the said cavity (9).

6. Pipe according to claim 5, characterized in what every section of pipe possesses, to the neighborhood of its adjusting extremities, a membrane (29, 30) spreading between the internal surface (25) and the two sections of tube (1, 2), to isolate the internal volume (26) of the pipe with regard to every zone of connection.
